# EUROPEAN PATENT SPECIFICATION

(11) **EP 0 588 504 B1**
(45) Date of publication and mention of the grant of the patent: **04.03.1998**
(21) Application number: 93306536.9
(22) Date of filing: 18.08.1993
(51) Int. Cl.: G02F 1/1335, F21V 8/00, F21V 5/02, G02B 5/02

(54) **A backlight device for a liquid crystal display device**
Hinterbeleuchtungsvorrichtung für eine Flüssigkristall-Anzeigevorrichtung
Dispositif d'éclairage par l'arrière pour un dispositif d'affichage à cristal liquide

(30) Priority: 16.09.1992 JP 246225/92
(43) Date of publication of application: 23.03.1994
(73) Proprietor: International Business Machines Corporation, Armonk, N.Y. 10504 (US)
(72) Inventor: Suzuki, Masaru, Yamato-shi, Kanagawa-ken (JP); Hanzawa, Fumihisa, Sanamihara-shi, Kanagawa-ken (JP); Mogi, Manabu, Yamato-shi, Kanagawa-ken (JP)
(74) Representative: Burt, Roger James, Dr.

(56) References cited:
- FR-A- 2 551 179
- GB-A- 619 084
- GB-A- 851 867
- DATABASE WPI Section Ch, Week 9219, Derwent Publications Ltd., London, GB; Class A32, AN 92-154889 & JP-A-4 091 905 (ASAHI CHEM) 25 March 1992
- IBM TECHNICAL DISCLOSURE BULLETIN. vol. 33, no. 1B , June 1990 , NEW YORK US pages 143 - 144 XP000122841 'Polarized backlight for liquid crystal display'

## Description

The present invention relates to a backlight device for use in a liquid crystal display (LCD) device and an LCD device incorporating a backlight device.

A typical LCD device includes an LCD panel, polarizers, a backlight device, and a LCD driver circuit, as well known in the art. The backlight device includes one or two fluorescent lamp(s), and a light guide. The light guide receives light from the fluorescent lamp to transmit light of uniform luminance to the LCD panel. The light guide has a lower surface for performing diffuse reflection and an upper surface for performing diffuse transmission, whereby light of uniform luminance is directed to the LCD panel from the upper surface.

To enhance the uniformity of the light across the LCD panel, various technologies have been developed. One of technologies is shown in Japanese utility model application 61-197685 (Published unexamined utility model application 63-101921), wherein a backlight device includes a diffuse transmission plate facing a LCD panel, a backside reflector and a lamp positioned between the diffuse transmission plate and the backside reflector. A centre portion of the diffuse transmission plate has a Fresnel lens arranged in parallel to the lamp.

Recent colour LCD devices used in a portable type personal computer have required a backlight device of high luminance and low power consumption. The high luminance and the low power consumption are inconsistent with each other, since a battery as small as possible is required in the portable type personal computer.

Further, the size of the recent portable type personal computer has been reduced to A4 size, and it has therefore been necessary to reduce the size of the LCD device, particularly the size of the backlight device.

A light diffusing plate having both a quadrangular prism structure and a rugged surface is disclosed by JP-A-4 091 905.
"IBM Technical Disclosure Bulletin", vol 33, no. 1B, June 1990, pages 143 and 144, discloses a back light device including a light source and a light guide. The light emerging from the light guide is first diffused by an acrylic translucent diffuser and then distributed by a separate acrylic sheet provided with a grooved prism structure.

The present invention seeks to improve on previous backlight devices used in LCD devices and accordingly provides in a first aspect, an optical film of transparent material comprising: a first surface having a grooved structure including a plurality of isosceles triangle prisms arranged side-by-side; a second surface having an optically rugged structure for performing diffuse transmission; wherein each isosceles prism having a top angle of between 95 degrees and 120 degrees.

In a second aspect of the invention there is provided an optical film of transparent material comprising: a first surface having a structure including a plurality of quadrangular prisms arranged side-by-side; a second surface having an optically rugged structure for performing diffuse transmission; and wherein each quadrangular prism having a top angle of between 95 degrees and 120 degrees.

In a third aspect of the invention there is provided a backlight device for use in a liquid crystal display device having a display panel, the backlight device comprising: a light source; light guide means having a first surface to face a back surface of a liquid crystal display panel when the backlight device is incorporated in a liquid crystal display device and a side surface positioned to receive light from the light source; a reflector means provided at a second surface of the light guide means; and an optical film of transparent material positioned adjacent the first surface of the light guide means, the optical film corresponding to the optical films mentioned above.

The backlight device of the present invention incorporating such an optical film is capable of gathering most or all of the light from the lamp(s) within the viewing angle of the LCD device. In other words, the luminance of light within the viewing angle of the LCD device is increased by decreasing the luminance outside the viewing angle.

The optical film is designed to maximise the overall luminance within the viewing angle whilst maintaining the luminance at the maximum viewing angle above a desired minimum value.

In a modification of the backlight device incorporating the optical film having isosceles triangle prisms, a second similar optical film is provided adjacent the first film, preferably with the grooves oriented perpendicularly with respect to the grooves of the first film.

In a further aspect of the invention there is provided a liquid crystal display device incorporating a backlight device as claimed in the appended claims and a polariser positioned between the display panel optical film of the backlight device.

Preferred embodiments of the invention will now be described, by way of example only, with reference to the accompanying drawings in which:
Fig. 1 shows an LCD device according to a preferred embodiment of one aspect of the present invention;
Fig. 2 is a plan view of the light guide 8 of Fig 1;
Fig. 3 shows an enlarged portion of the LCD device of Fig. 1;
Fig. 4 is a perspective view of one embodiment of the optical film of Fig.1;
Fig. 5 shows various light paths through the optical film of Fig. 4;
Fig. 6 shows characteristic curves of the optical film of Fig. 4;
Fig. 7 shows characteristic curves of the optical film of Fig. 4;
Fig. 8 is a schematic showing of a first arrangement of optical film, polariser and liquid crystal display panel;
Fig. 9 is a schematic showing of a second arrangement of optical films, polariser and LCD display panel;
Fig. 10 is a schematic showing of a third arrangement of optical films, polariser and LCD display panel;
Fig. 11 shows the characteristic curves of the optical film(s) of the arrangements of Figures 8, 9, 10, 12 and 13;
Fig. 12 is a schematic showing of a fourth arrangement of optical film, polariser and LCD display panel;
Fig. 13 is a schematic showing a fifth arrangement of optical films, polariser and LCD display panels;
Fig. 14 is a perspective view of an alternative optical film used in the backlight device of Fig. 1;
Fig. 15 shows a backlight structure incorporating optical film(s) and an indication of a potential problem with such a structure;
Fig. 16 shows a backlight including diffuse transmission films at the edge of the light guide.

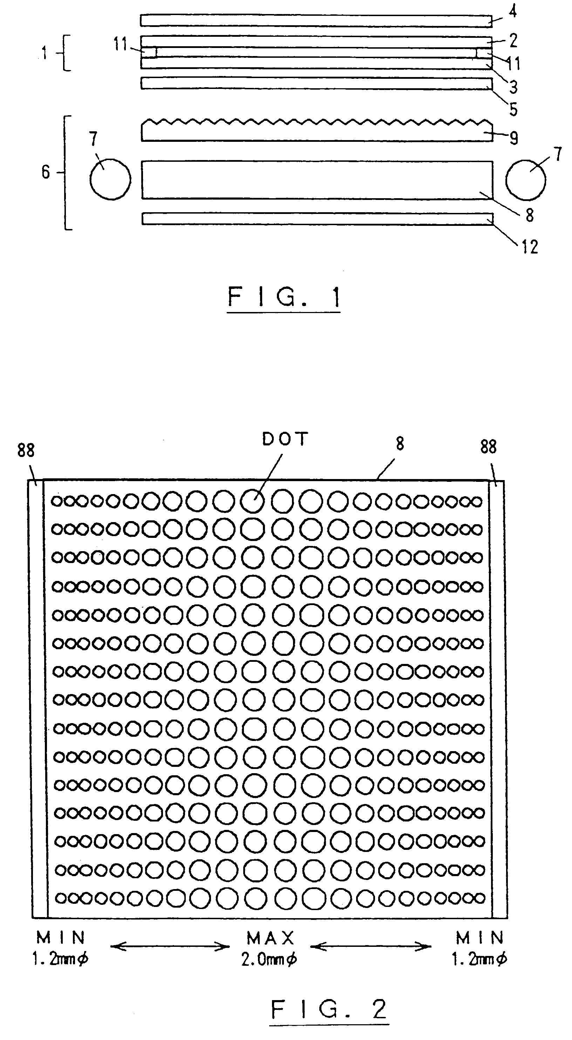

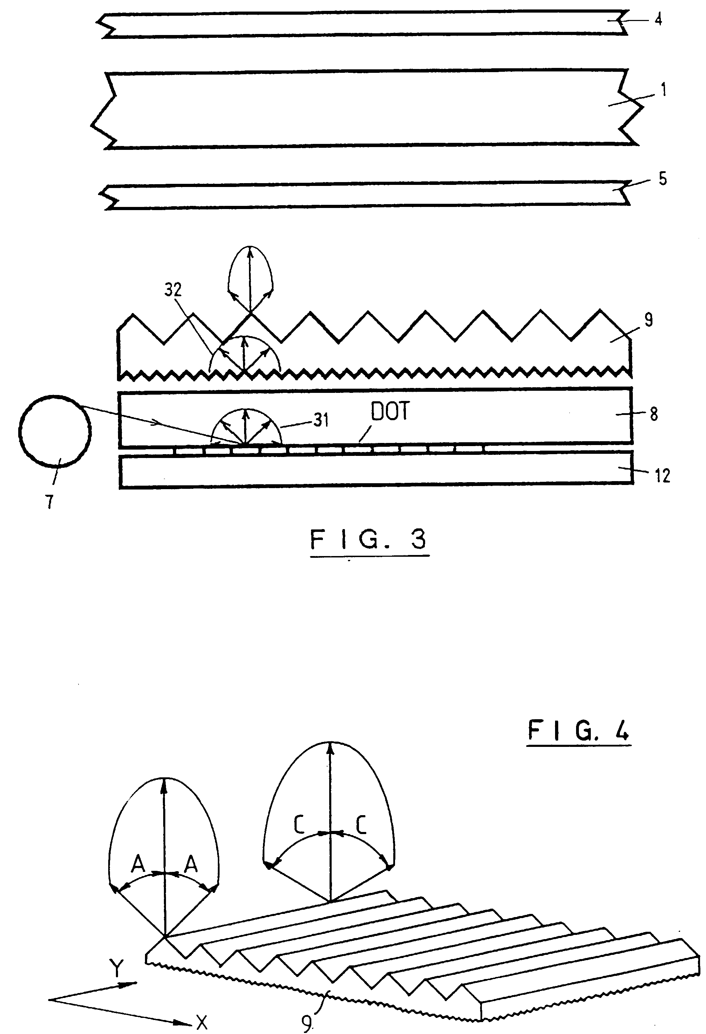

Fig.1 shows an LCD device which comprises an LCD glass panel 1, polarizers 4 and 5 and a backlight device 6. The LCD glass panel 1 includes two glass substrates 2 and 3, peripheral edges of which are sealed by edge seal 11, such as epoxy resin, and liquid crystal material is retained between the glass substrates 2 and 3. A polarizing axis of polarizer 4 is perpendicular to a polarizing axis of polarizer 5. The backlight device 6 includes fluorescent lamps 7, a light guide 8 and a thin optical film 9. The light guide 8 is made of transparent material, such as polymethylmethacrylate. On a first or bottom surface of the light guide 8 is printed a reflectable dot pattern of a reflective material, e.g. alumina as shown in Fig.2. The size of the printed dots are varied from about 2mm at the centre portion to about 1.2mm at the peripheral portion, as shown in Fig.2. The second or upper surface of the light guide 8 is not provided with the printed dots. The second surface of the light guide faces the optical film 9, as shown in Fig.3. Each dot performs a diffuse reflection which is shown by a reference number 31. The printed dots cause the light from the fluorescent lamps 7 to be reflected toward the LCD panel 1 with substantially the same luminance.

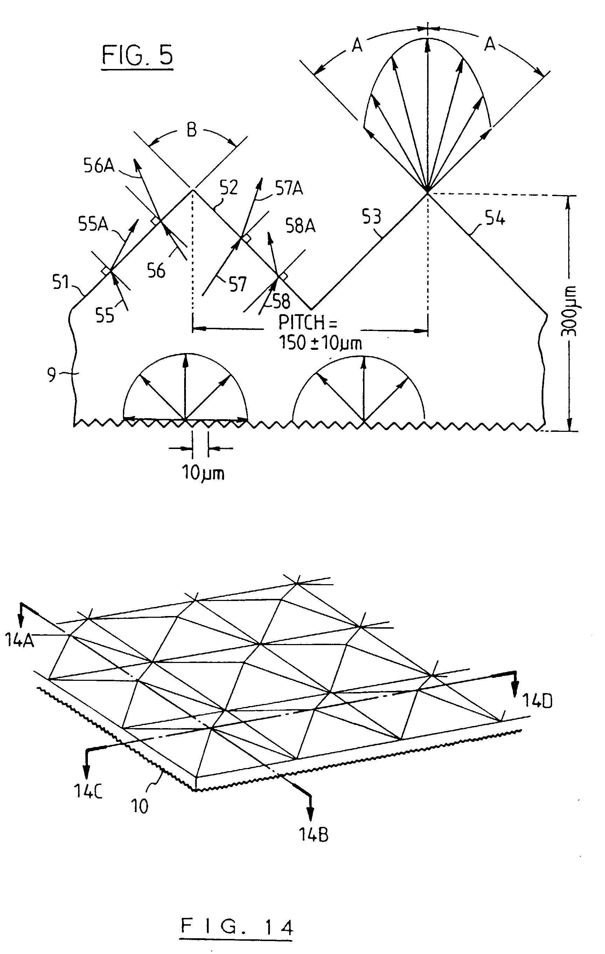

The structure of a preferred optical film 9 is shown in Figs. 4 and 5. The optical film 9 is made of a transparent material which has a total transmission equal to or more than 89% and a refractive index of 1.5 to realize a large critical angle from the material to air. Examples of the material of the optical film 9 are polymethylmethacrylate or polycarbonate.

A lower or first surface of the optical film 9 has an optically rugged structure which is similar to a surface of frosted glass. The optically rugged structure is required to perform a diffuse transmission wherein the light of the same intensity or luminance is diffused in the substantially all directions covered by 180 degrees, as shown by a reference number 32 in the Fig.3. A size between peaks of the rugged structure is about 10 micrometres. If the first or bottom surface is optically smooth, the diffuse transmission does not occur. The diffuse transmission at the first surface is required to prevent the printed dot pattern (when present) of the light guide 8 from being observed by an operator. More particularly, the light from the fluorescent lamps 7 is diffuse-reflected at each dot. Then, the light is diffused by the diffuse transmission of the optically rugged structure of the optical film 9. If the optically rugged structure is not formed on the first surfaces of the optical film 9, the printed dot pattern of the light guide 8 will be seen by the user, thus leading to a degradation in quality of the displayed image.

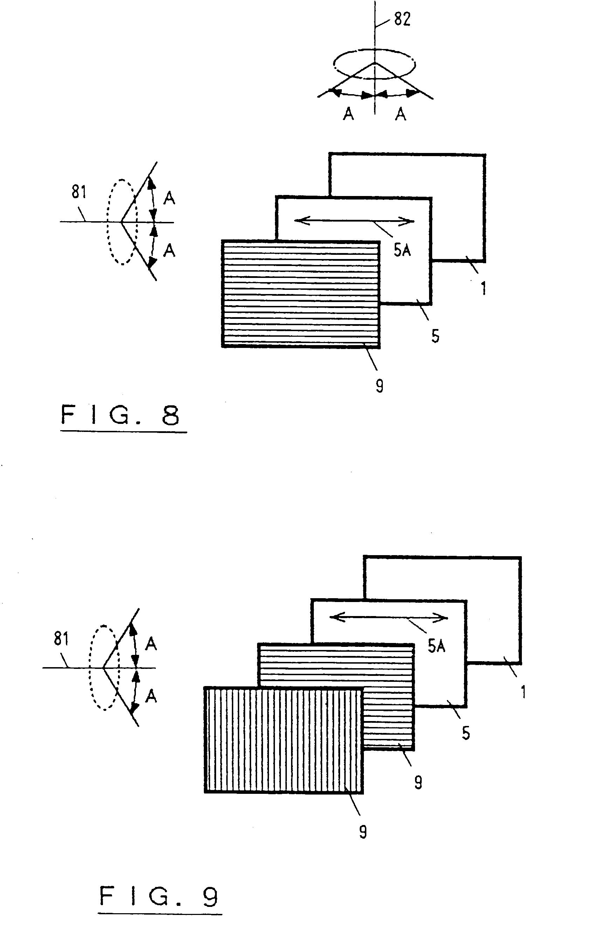

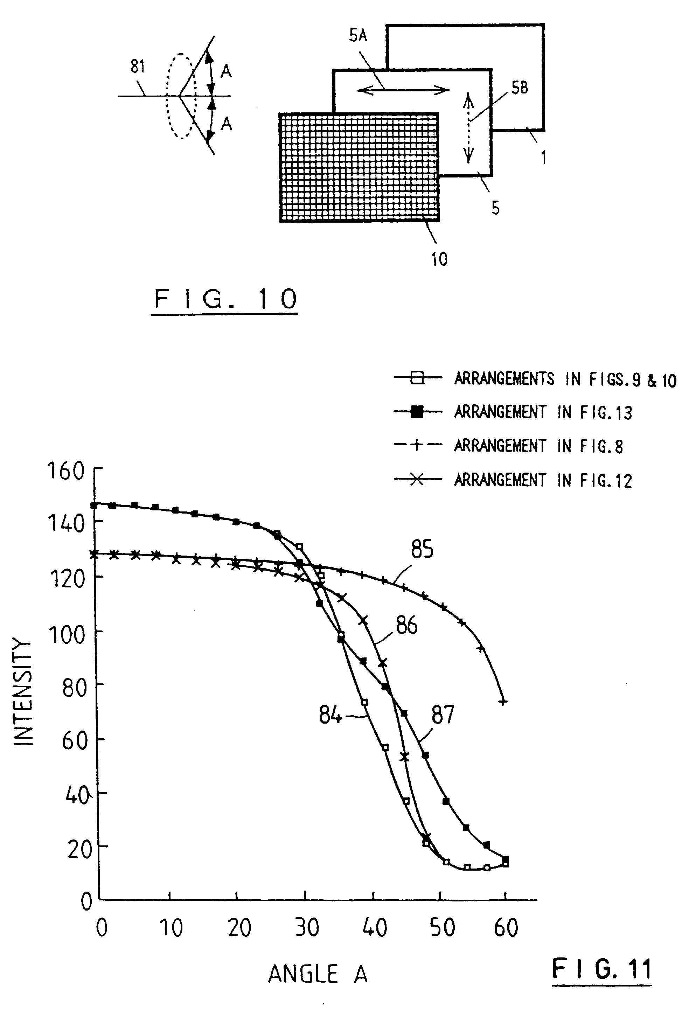

An upper or second surface of the optical film 9 has a grooved or waved structure, as shown in the Figs. 3, 4 and 5, which includes a plurality of isosceles triangle prisms arranged side-by-side with peaks and valleys being arranged in parallel to each other. A direction of the peaks and valleys is aligned to a polarizing axis 5A of the polarizer 5, as described hereinafter with reference to Figs. 8, 9, 10 and 12, to decrease the loss of light transmitted to the LCD panel 1.

US patent 4,906,070 discloses a thin flexible film made of a transparent polymeric material including a structured surface and an opposite smooth surface, wherein light striking either surface within certain angular ranges, is totally internally reflected. The structured surface includes a linear array of miniature substantially right angled isosceles prisms arranged side-by-side to form a plurality of peaks and grooves. Although similar in some respects to the film described above, it is to be noted that the film of US Patent 4,906,070 would not be suitable for use in backlight devices.

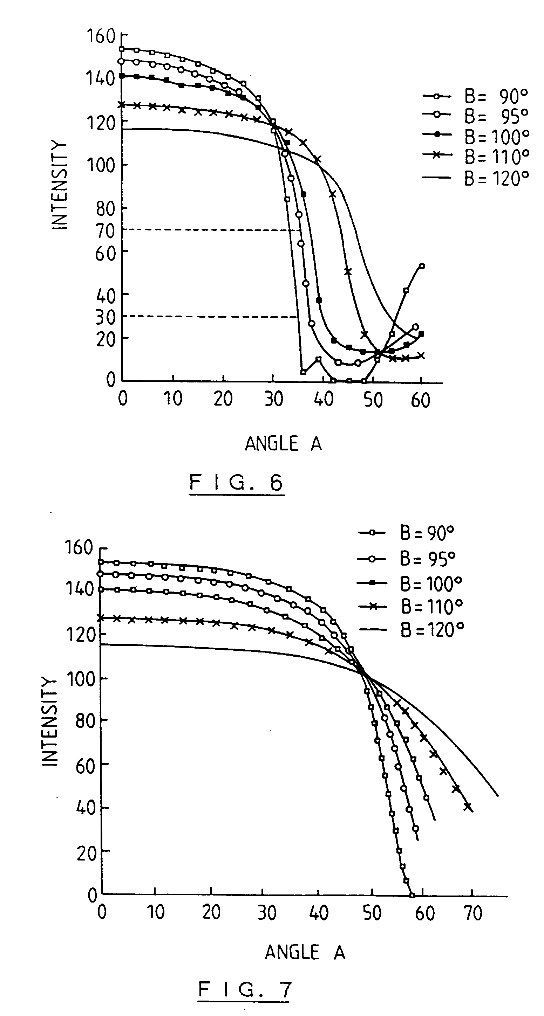

Fig.5 shows various light paths inside and outside of the optical film 9. As described hereinbefore, the incident light into the rugged structure of the bottom of the optical film 9 is diffuse-transmitted. The diffused light 55, 56, 57, 58 reaches to surfaces 51, 52 at various angles and is refracted, as shown in Fig.5. The refracted light 55A, 56A, 57A, 58A is gathered within a range defined by an angle 2A. The angle A depends upon a top angle B of the isosceles triangle prism, as shown in Figs. 6 and 7 which show experimental results.

Before describing the curves in Fig.6, the viewing angle of the LCD device is defined. As well known in the art, the viewing angle is defined as an angle from a vertical line of the surface of the LCD device in which a displayed image of the LCD device can be satisfactorily observed by the operator. The desirable viewing angle in a vertical direction is generally at least 35 degrees, and the desirable viewing angle in the horizontal direction is generally about 55 degrees. Using a backlight device including an optical film 9 of the present invention, the light from the fluorescent lamps is gathered within the viewing angle of the LCD device. In other words, the luminance of light within the viewing angle of the LCD device is increased and the luminance of light outside the viewing angle of the LCD device is decreased by use of the optical film 9.

Referring to the Fig.6, a vertical axis represents a relative luminance represented by percentage, and a horizontal axis represents the angle A. The angle A was measured by arranging the peaks and valleys of the optical film 9 in the horizontal direction of the LCD panel 1 and by rotating the LCD device around an axis 81, as shown in Fig.8. Since the purpose of Figs. 8, 9, 10, 12 and 13 is to show the direction of peaks and valleys of the optical film 9 or 10 to the polarizing axis 5A of the polarizer 5 and the LCD panel 1, the polarizer 4 and other components of the backlight device 6 are not shown in these figures.

The value 100% of the vertical axis in Fig.6 represents a luminance when the optical film 9 is not inserted between the polarizer 5 and the light guide 8. The five curves represent the cases of various top angles B of the isosceles triangle prism of the optical film 9. It is apparent in Fig.6 that the luminance within the particular angle is increased by inserting the optical film 9 between the polarizer 5 and the light guide 8. The increase of the luminance is caused by the light gathering effect of the optical film 9.

In accordance with the present invention, a preferred top angle B is 95 degrees to 120 degrees, for the following reasons.

Comparing the five curves, in the case of the angle B=90 degrees, the luminance at the required vertical viewing angle A=35 degrees is 30%. The luminance required for a practical use of the LCD device for satisfying a minimum image quality is 65-70%. Therefore, the luminance 30% of the top angle B=90 degrees at A=35 degrees causes a degradation of image quality. The luminance of the angle B=95 degrees at the viewing angle A=35 degrees is 70%, so that the required minimum image quality is realized.

The curve of B=120 degrees shows the highest luminance value of 117%. But, if the angle B is more than 120 degrees, the luminance is decreased to a level near to about 100%, and the merit of the using the optical film 9 is decreased. Based upon this discovery, the upper limit of the angle B is selected to be 120 degrees.

Fig.7 shows a relationship between the relative luminance and the angle A measured by arranging the peaks and valleys of the optical film 9 in the horizontal direction of the LCD panel 1 and by rotating the LCD device around an axis 82, as shown in the Fig.8. The value 100% of the vertical axis in Fig.7 represents a luminance when the optical film 9 is not inserted between the polarizer 5 and the light guide 8.

Comparing the five curves in the Fig.7; in the case of the angle B=90 degrees, the luminance at the required horizontal viewing angle A=55 degrees is 30%. In the case of the angle B=95 degrees, the luminance at the viewing angle A=55 degrees is 65%. Since the luminance required for the practical use of the LCD device for satisfying the minimum image quality is 65-70%, as stated hereinbefore, the angle B=95 is selected.

The curve of B=120 degrees shows the highest luminance value of 115%. If angle B is more than 120 degrees, the luminance decreased to about 100%. Based upon this discovery, the upper limit of the angle B is selected to be 120 degrees.

Based upon the experimental data shown in the Figs. 6 and 7, the preferred top angle B is from 95 degrees to 120 degrees.

Fig.11 shows four characteristic curves 84, 85, 86 and 87. The curve 84 was measured by rotating the arrangement shown in Figs. 9 and 10 around the axis 81. The curve 85 was measured by rotating the arrangement shown in Fig. 8 around axis 82. The curve 86 was measured by rotating the arrangement shown in Fig.12 around axis 81. The curve 87 was measured by rotating the arrangement shown in Fig.13 around axis 81 or 82.

In Fig.8, the direction of the peaks and valleys of the optical film 9 are oriented in the direction of the polarizing axis 5A of the polarizer 5. In Fig.12, the direction of the peaks and valleys of the optical film 9 are oriented in the polarizing axis 5A of the polarizer 5. In Fig.9, two optical films 9 overlap each other and the direction of the peaks and valleys of one of the two optical films 9 is perpendicular to the direction of the peaks and valleys of the other of the two optical films 2.

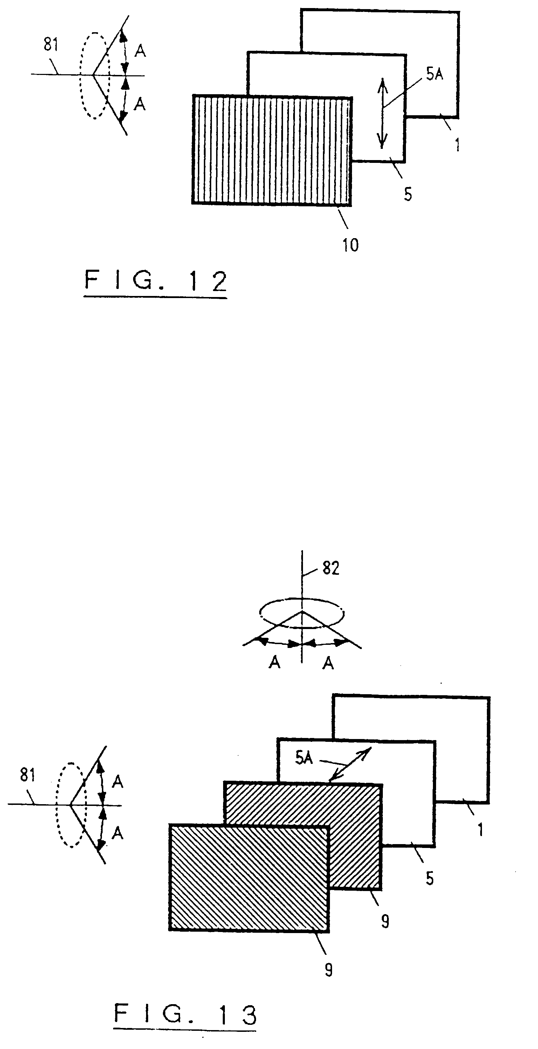

The optical film 10 used in Fig.10 is shown in Fig.14. The optical film 10 has a plurality of quadrangular prisms arranged side-by-side. A cross-section along 14A - 14B and 14C - 14D is the same as that shown in the Fig.5. And, the material of the optical film 10 is the same as that of the optical film 9. The single optical film 10 performs the same function as that of the two optical films 9 arranged orthogonally to each other. The optical films 9 and 10 used in the arrangements shown in the Figs. 8, 9, 10, 12 and 13 have the angle B=110 degrees.

The arrangement shown in Fig.8 has the horizontal viewing angle A=0-60 degrees in which the luminance of about 130% - 70% is maintained, as shown in Fig.7, and has the vertical viewing angle A=0-43 degrees in which luminance of about 127% - 70% is maintained, as shown in Fig.6.

The film arrangement shown in Fig.12 has the horizontal viewing angle A=0-43 degrees in which the luminance of about 130% - 70% is maintained, as shown in Fig.6, and has the vertical viewing angle A=0-60 degrees in which the luminance of about 128% - 70% is maintained, as shown in Fig.7.

The arrangement shown in Figs. 9 and 10 has a higher luminance about 148% - 125% in the viewing angle A=0-30 degrees, although the luminance in the angle A=31-60 degrees is lower than that of the curve 85, as shown in Fig.11.

The arrangement shown in Fig.13 has the comparable luminance to that of the arrangement shown in Figs.9 and 10 in the angle 0-36 degrees, and has a higher luminance than that of the arrangement of Figs.9 and 10 in the angle 37-45 degrees. It is apparent that the optical films 9 and 10 increases the luminance in the ordinary viewing angle A= 35 degrees and A= 55 degrees of the LCD device.

A distance between the peaks of the optical film 9 and 10 is defined as a pitch, as shown in Fig.5. The pitch is selected to prevent interference fringes from being observed by an operator when the optical film 9 or 10 is used in the LCD panel 1 which has gate lines spaced from each other by 330 µm and data lines spaced from each other by 110 µm. It has been experimentally found by the inventors of the present invention that any interference fringes have been observed in the case that the pitch is equal to or less than 150 µm.

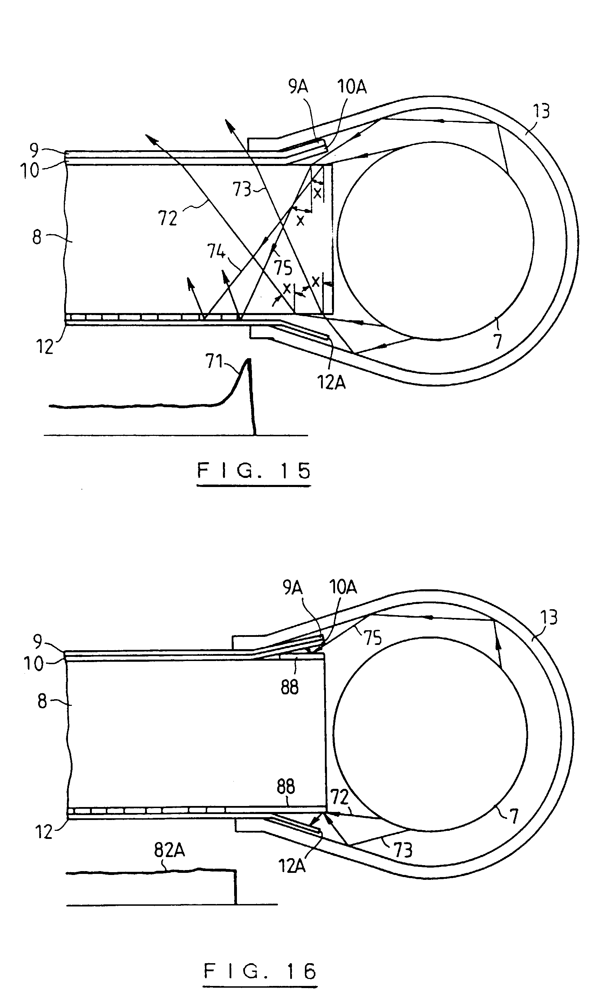

Fig.15 shows a problem raised in a structure for mounting the fluorescent lamp 7 to the light guide 8. The optical plate 9 or 10 and the reflector plate 12 are mechanically pressed to the light guide 8 by a cylindrical reflector plate 13. The fluorescent lamp 7 is mounted on the reflector plate 13 by supporting members, not shown. When these parts are assembled, end portions 9A or 10A of the optical film 9 or 10 are closely contacted onto the upper surface of the light guide 8, and an end portion 12A of the reflector plate 12, e.g, a white film, is closely contacted onto the lower surface of the light guide 8.

It has been found by the inventors of the present invention that the luminance 71 at the edge portion of the LCD panel 1 is undesirably increased, as shown in Fig.15, resulting in a degradation in image quality; and that this increase in luminance is caused by a separation of end portions 9A, 10A and 12A from the surface of the light guide 8 during a lapse of time due to a high temperature emitted from the fluorescent lamp 7. More particularly, it has been found that the undesired peak 71 of the luminance is mainly caused by light 72 and 73 which directly passes at a sharp angle X from the bottom surface of the light guide 8 without the diffuse transmission to the LCD panel 1, and light 74 and 75 which passes at the sharp angle X from the upper surface of the light guide 8 also increase the luminance 71 at the edge portion.

To solve the problem, a thin coating 88 is deposited or coated on the edge of the bottom and upper surface of the light guide 8, as shown the Figs. 2 and 16. The thin coating 88 is formed of a material which has low transmittance and performs the perfect diffuse transmission. The thin coatings 88 prevent the light 72, 73 and 75 from being directly inputted from the bottom and upper surfaces of the light guide 8, whereby an uniform or even luminance 82A can be realized, as shown in the Fig.16. The coatings 88 are made of alumina oxide or white paint. The use of such a thin coating is of benefit in a device which does not include optical films 9,10 as, for the above described reasons, it acts to counter the increase in edge luminance caused by the separation of the reflector plate from the light guide.

## Claims

1. An optical film (9) of transparent material comprising:
a first surface having a grooved structure including a plurality of isosceles triangle prisms arranged side-by-side; and
a second surface having an optically rugged structure for performing diffuse transmission; wherein
each isosceles triangle prism has a top angle of between 95 degrees and 120 degrees.

2. An optical film (9) of transparent material comprising:
a first surface having a structure including a plurality of quadrangular prisms arranged side-by-side; and
a second surface having an optically rugged structure for performing diffuse transmission; wherein
each quadrangular prism has a top angle of between 95 degrees and 120 degrees.

3. An optical film as claimed in claims 1 or 2 wherein the transparent material has a total transmission equal to or more than 89%.

4. An optical film as claimed in claims 1, 2 or 3 wherein the distance between the peak of the prisms is equal or less than 150 µm.

5. A backlight device (6) for use in a liquid crystal display device having a display panel, the backlight device comprising:
a light source (2);
light guide means (8) having a first surface to face a back surface of a liquid crystal display panel when the backlight device is incorporated in a liquid crystal display device and a side surface positioned to receive light from the light source (7);
a reflector means provided at a second surface of the light guide means (8); and
an optical film (9) of transparent material positioned adjacent the first surface of the light guide means, wherein the optical film (9) is according to the optical films claimed in any of claims 1 to 4.

6. A backlight device (6) as claimed in claim 4 further comprising a second optical film (9) of transparent material positioned adjacent the first optical film (9), wherein the second film (9) is according to the optical films claimed in any of claims 1 to 4.

7. A backlight device (6) as claimed in claim 6, wherein the waves or grooves of the second optical film (9) are oriented perpendicularly with respect to the waves or grooves of the first optical film (9).

8. A backlight device as claimed in any of claims 5 to 7, further comprising a film of material performing diffuse transmission formed on an edge area of the second surface of the light guide means adjacent the light source.

9. A liquid crystal display device including a liquid crystal display panel, a backlight device as claimed in any of claims 5 to 8 and a polarizer positioned between the liquid crystal display panel and an optical film of the backlight device.

10. A liquid crystal display device as claimed in claim 9, wherein the orientation direction of the peaks and valleys of the isosceles triangle prisms or quadrangular prisms of said optical film is parallel to a polarising axis of the polariser.

## Patentansprüche

1. Ein optischer Film 9 aus transparentem Material, bestehend aus:
einer ersten Oberfläche mit einer gerillten Struktur, die mehrere mit den Seiten aneinander angrenzende Prismen aus gleichschenkligen Dreiecken enthält; und
einer zweiten Oberfläche mit einer optisch rauhen Struktur für eine diffuse Durchlässigkeit; worin
jedes Prisma aus gleichschenkligen Dreiecken an der Spitze einen Winkel zwischen 95 und 120 Grad aufweist.

2. Ein optischer Film 9 aus transparentem Material, bestehend aus:
einer ersten Oberfläche mit einer Struktur, die mehrere mit den Seiten aneinander angrenzende vierseitige Prismen enthält; und
einer zweiten Oberfläche mit einer optisch rauhen Struktur für eine diffuse Durchlässigkeit; worin
jedes vierseitige Prisma an der Spitze einen Winkel zwischen 95 und 120 Grad aufweist.

3. Ein optischer Film gemäß Anspruch 1 oder 2, bei dem das Transparente Material eine Gesamtdurchlässigkeit von 89% oder mehr besitzt.

4. Ein optischer Film gemäß Anspruch 1, 2 oder 3, bei dem der Abstand zwischen den Spitzen der Prismen kleiner oder gleich 150 µm ist.

5. Eine Hintergrundbeleuchtungs-Vorrichtung 6 zur Verwendung in einer Flüssigkristall-Anzeigevorrichtung mit einer Anzeigefläche, bestehend aus
einer Lichtquelle 2;
einem Lichtleitmittel 8 mit einer ersten Oberfläche, die einer Hintergrundfläche einer Flüssigkristallanzeigefläche gegenüberliegt, wenn die Hintergrundbeleuchtungs-Vorrichtung in eine Flüssigkristall-Anzeigevorrichtung integriert ist, und mit einer Seitenfläche, die so angeordnet ist, daß sie Licht von der Lichtquelle 7 empfängt;
einem Reflektormittel auf der zweiten Oberfläche des Lichtleitermittels 8; und
einem optischen Film 9 aus transparentem Material, der an die erste Oberfläche des Lichtleitmittels angrenzt, wobei der optische Film 9 den optischen Filmen gemäß Anspruch 1 bis 4 entspricht.

6. Eine Hintergrundbeleuchtungs-Vorrichtung 6 gemäß Anspruch 4, die außerdem einen zweiten optischen Film 9 aus transparentem Material enthält, welche an den ersten optischen Film 9 angrenzt, wobei der zweite optische Film 9 den optischen Filmen gemäß Anspruch 1 bis 4 entspricht.

7. Eine Hintergrundbeleuchtung 6 gemäß Anspruch 6, bei der die Wellen oder Rillen des zweiten optischen Films 9 senkrecht zu den Wellen oder Rillen des ersten optischen Films 9 ausgerichtet sind.

8. Eine Hintergrundbeleuchtung gemäß Anspruch 5 bis 7, die außerdem in einem Kantenbereich der zweiten Oberfläche des Lichtleitmittels neben der Lichtquelle einen Film aus einem Material enthält, das für eine diffuse Durchlässigkeit sorgt.

9. Eine Flüssigkristall-Anzeigvorrichtung mit einer Flüssigkristall-Anzeigefläche, einer Hintergrundbeleuchtung gemäß Anspruch 5 bis 8 und einem zwischen der Flüssigkristall-Anzeigefläche und einem optischen Film der Hintergrundbeleuchtungs-Vorrichtung befindlichen Polarisator.

10. Eine Flüssigkristall-Anzeigevorrichtung gemäß Anspruch 9, bei der die Orientierungsrichtung der Spitzen und Talpunkte der aus gleichschenkligen Dreiecken bestehenden oder vierseitigen Prismen des optischen Films parallel zur Polarisationsachse des Polarisators liegt.

## Revendications

1. Un film optique (9) réalisé en un matériau transparent comprenant :
une première surface ayant une structure générale comprenant une pluralité de prismes à triangles isocèles agencés côte à côte;
une deuxième surface ayant une structure rendue optiquement rugueuse pour une effectuer une transmission diffuse; dans lequel chaque prisme à triangle isocèle a un angle au sommet compris dans la plage entre 95° et 120°.

2. Un film optique (9) en matériau transparent comprenant :
une première surface ayant une structure générale comprenant une pluralité de prismes quadrangulaires agencés côte à côte;
une deuxième surface ayant une surface rendue rugueuse optiquement pour effectuer une transmission diffuse, dans lequel chaque prisme quadrangulaire a un angle au sommet compris dans la plage entre 95° et 120°.

3. Un film optique selon la revendication 1 ou la revendication 2, dans lequel le matériau transparent a un coefficient de transmission égal ou supérieur à 89 %.

4. Un film optique les revendications 1, 2 ou 3 dans lequel la distance entre le pic des prismes est égal ou inférieur à 150 µm.

5. Un dispositif à rétroéclairage (6) destiné à être utilisé dans un dispositif d'affichage à cristal liquide ayant un panneau d'affichage, le dispositif à rétroéclairage comprenant :
une source lumineuse (2);
des moyens de guidage de lumière (8) ayant une première surface tournée vers une surface arrière d'un panneau d'affichage à cristal liquide, lorsque le dispositif à rétroéclairage est incorporé dans un dispositif d'affichage à cristal liquide, et une surface latérale, positionnée de manière à recevoir de la lumière venant de la source lumineuse (7);
un moyen réflecteur prévu sur une deuxième surface des moyens de guidage de lumière (8); et
un film optique (9) en matériau transparent, positionné adjacent à la première surface des moyens de guidage de lumière, dans lequel le film optique (9) est réalisé comme les films optiques indiqués dans l'une quelconque des revendications 1 à 4.

6. Un dispositif de rétroéclairage (6) selon la revendication 4, comprenant en outre un deuxième film optique (9) en matériau transparent, positionné adjacent au premier film optique (9), dans lequel le deuxième film optique (9) est réalisé comme les films optiques indiqués dans l'une quelconque des revendications 1 à 4.

7. Un dispositif de rétroéclairage (6) selon la revendication 6, dans lequel les ondes ou rainures de deuxième film optique (9) sont orientées perpendiculairement par rapport aux ondes ou rainure du premier film optique (9).

8. Un dispositif de rétroéclairage (6) selon la revendication 5 à 7, comprenant en outre un film en matériau donnant une transmission diffuse, formé sur une aire de bordure de la deuxième surface des moyens de guidage de lumière en un endroit adjacent à la source lumineuse.

9. Un dispositif d'affichage à cristal liquide comprenant un panneau d'affichage à cristal liquide, un dispositif à rétroéclairage, tel que selon une quelconque des revendications 5 à 8, et un polariseur positionné entre le panneau d'affichage à cristal liquide et un film optique du dispositif à rétroéclairage.

10. Un dispositif d'affichage à cristal liquide selon la revendication 9 dans lequel la direction de l'orientation des crêtes et des vallées des prismes à triangles isocèles ou des prismes quadrangulaires dudit film optique est parallèle à l'axe de polarisation du polariseur.
